# EUROPÄISCHE PATENTSCHRIFT

(11) **EP 1 246 152 B1**
(45) Veröffentlichungstag und Bekanntmachung des Hinweises auf die Patenterteilung: **19.11.2008**
(21) Anmeldenummer: 01107646.0
(22) Anmeldetag: 28.03.2001
(51) Int. Cl.: G09F 3/04, G09F 3/12, A01G 23/099

(54) **Signierelement zum Kennzeichnen von Holz, insbesondere von Baumstämmen**
Marking device for wooden objects, in particular for tree trunks
Dispositif de marquage pour identifier du bois, notamment pour des troncs d'arbres

(43) Veröffentlichungstag der Anmeldung: 02.10.2002
(73) Patentinhaber: Latschbacher GmbH, 4484 Kronstorf (AT)
(72) Erfinder: Latschbacher, Klaus, Dipl.-Ing., 4484 Kronstorf (AT); Huber, Johann, 4484 Kronstorf (AT); Ploier, Gerhard, 4050 Traun (AT)
(74) Vertreter: Vetter, Hans

(56) Entgegenhaltungen:
- EP-A1- 0 248 928
- DE-A1- 19 807 284
- GB-A- 2 265 136

## Beschreibung

Die Erfindung betrifft ein Signierelement zum Kennzeichnen von Holz, insbesondere von Baumstämmen, mit den Merkmalen des Oberbegriffs des Anspruchs 1.

Ein beispielsweise aus der GB 2075464 A bekanntes Signierelement oder Signierplättchen trägt eine Signatur in Gestalt einer Zahl oder einer sonstigen optischen Codierung, um beispielsweise Baumstämme im Wald zu kennzeichnen. Die Codierzahl wird dann beispielsweise in einem tragbaren Computer den entsprechenden Holzdaten des jeweiligen Baumstammes zugeordnet.

Nachteilig an der bekannten Signatur ist das Erfordernis einer einwandfreien Sichtverbindung zum Ablesen der Codierzahl, wobei Tabellen oder ein Rechner zur Verfügung stehen müssen, um aus der Zahl die entsprechenden Holzdaten ableiten zu können. Witterungsbedingt und lagebedingt ist es häufig schwierig, die Zahl ablesen zu können. Beim Erfassen einer größeren Zahl von Baumstämmen muss in mühsamer und arbeitsintensiver Weise jede einzelne Codierzahl abgelesen und in den Computer eingegeben werden, um eine Übersicht über den gesamten Bestand, beispielsweise bei einer Anlieferung, zu erhalten. Manipulationen bei der Datenzuordnung sind leicht möglich.

Aus der DE 198 07 284 A ist zwar bereits eine mit einem Transponder versehene Einrichtung zur Registrierung und Verwaltung von Bäumen bekannt, jedoch muss diese mit einem ein Schraubgewinde aufweisenden Bolzen versehene Einrichtung nach Art eines Nagels zunächst eingehämmert und dann noch mit einem speziellen Werkzeug geschraubt werden.

Eine Aufgabe der vorliegenden Erfindung besteht darin, ein Signierelement der eingangs genannten Gattung zu schaffen, durch das ein Erfassen von Holzdaten und die Befestigung an Holz, z.B. an Baumstämmen, einfacher, schneller, sicherer und automatisierbar möglich wird.

Diese Aufgabe wird erfindungsgemäß durch ein Signierelement mit den Merkmalen des Anspruchs 1 gelöst.

Die Vorteile des erfindungsgemäßen Signierelements bestehen insbesondere darin, dass eine Vielzahl von Holzdaten und anderen Daten drahtlos in das Signierelement eingegeben und entsprechend wieder drahtlos ausgelesen werden kann. Es ist keine Sichtverbindung zum Signierelement beim Lesen oder Schreiben erforderlich. Mehrere Signierelemente, das heißt beispielsweise mehrere Baumstämme, können gleichzeitig drahtlos erfasst werden. Dies ermöglicht in einfacher Weise die automatische und drahtlose Erfassung der Daten aller auf einem Lkw aufgeladenen Baumstämme beim Einfahren in einen Holzverarbeitungsbetrieb. Es kann dabei jeweils nicht nur eine Vielzahl von Daten gespeichert werden, sondern diese können auch bei Bedarf geändert oder ergänzt werden, beispielsweise durch die Daten Dienst- und Forstbetrieb, den Transportbetrieb, den Schlägerer und den Rücker. Staub, Schmutz, Feuchtigkeit und Temperaturen haben keinen Einfluss auf die Speicherung und das Auslesen der gespeicherten Daten. Schließlich ist es noch vorteilhaft, dass alle Signierelemente zunächst identisch hergestellt werden können, das heißt beispielsweise ohne eine zuvor eingeprägte oder aufgedruckte durchgehende Nummerierung, da die Eingabe der Daten erst an Ort und Stelle, also beispielsweise im Wald, erfolgt. Durch das Ablegen der Daten im Signierelement, das heißt am jeweiligen Stamm selbst, kann ein Auslesen der Daten durch beliebige drahtlose Auslesegeräte erfolgen, ohne dass diese mit zugeordneten Informationen versehen sein müssten. Das Signierelement besteht vorzugsweise aus Kunststoff und besitzt als Befestigungsteile einstückig angeformte Einschlagvorsprünge, wobei an den vier Ecken der entgegengesetzten Seite 4 hakenartige Haltevorsprünge zum Anstecken des Signierplättchens an einen Einschlaghammer einstückig angeformt sind. Der vorzugsweise plättchenförmig oder folienartig ausgebildete Transponder wird im Signierkörper versenkt angeordnet, um einen besseren mechanischen Schutz zu erreichen. Hierzu trägt auch eine den Transponder insbesondere wasserdicht abdeckende Abdeckplatte und/oder Abdeckfolie bei. Hierdurch wird auch erreicht, dass der Transponder beim Einschlagen in ein Holzteil, beispielsweise ein Rundholz, nicht beschädigt wird und auch nach dem Einschlagen noch die erforderliche Abdichtung gegen Wasser und sonstige Umwelteinflüsse besitzt.

Durch die in den Unteransprüchen aufgeführten Maßnahmen sind vorteilhafte Weiterbildungen und Verbesserungen des im Anspruch 1 angegebenen Signierelements möglich.

Der Transponder besitzt in vorteilhafter weise eine Sende-/Empfangsantenne für hochfrequente elektromagnetische Wellen, um eine möglichst gute Reichweite für die Datenübertragung zu erzielen. In einer günstigen flachen Bauweise umgreift die Antenne einen mit dem Datenspeicher versehenen Elektronik-Chip, durch den in an sich bekannter Weise das Einlesen und Auslesen von Daten über hochfrequente elektromagnetische Wellen ermöglicht wird.

Die Abdeckplatte oder -folie wird im einfachsten Falle mit dem Signierkörper verklebt, insbesondere mittels einer selbsthaftenden Klebeschicht oder eines selbsthaftenden, den Transponder umgreifenden Folienrahmens. Alternativ hierzu kann die vorzugsweise im Signierkörper versenkte Abdeckplatte auch randseitig mit dem Signierelement verschweißt werden, vorzugsweise mittels Ultraschallschweißen, Laserschweißen oder Heißverpressen. Die letzteren Methoden gewährleisten eine höhere Festigkeit und einen besseren Schutz gegen mechanische Beschädigungen, insbesondere beim Einschlagen des Signierelements in das Holz.

Zur Erleichterung des Schweißvorgangs und zur Erzielung einer besseren Schweißverbindung besitzt die Abdeckplatte und/oder der Signierkörper zum gegenseitigen Verschweißen eine den Transponder umgreifende Schweißleiste.

Zusätzlich zur elektronischen Signatur durch den Transponder kann die Abdeckplatte oder die Abdeckfolie auch noch mit einer an sich bekannten optischen Signatur versehen sein, um auch ohne drahtloses Lesegerät einige Informationen zu erhalten.

Ausführungsbeispiele der Erfindung sind in der Zeichnung dargestellt und in der nachfolgenden Beschreibung näher erläutert. Es zeigen:
- Fig. 1: ein Signierplättchen mit Abdeckplane und Folienrahmen für einen Transponder in der Explosionsdarstellung als erstes Ausführungsbeispiel der Erfindung,
- Fig. 2: ein Signierplättchen mit einem an der gegenüberliegenden Seite des Signierkörpers versenkten Transponder und einer codierten Abdeckplatte in einer Explosionsdarstellung als zweites Ausführungsbeispiel der Erfindung,
- Fig. 3: ein in einer Schmelzschweißvorrichtung eingesetztes Signierplättchen mit einer ebenfalls versenkten Abdeckplatte in einer Schnittdarstellung als drittes Ausführungsbeispiel,
- Fig. 4: das in Fig. 3 dargestellte Signierplättchen in einer Explosionsdarstellung,
- Fig. 5: ein in einer Ultraschall-Schweißvorrichtung einge- setztes Signierplättchen mit versenkter Abdeckplatte in einer Schnittdarstellung als viertes Ausführungsbeispiel der Erfindung und
- Fig. 6: das in Fig. 5 dargestellte Signierplättchen in einer Explosionsdarstellung.

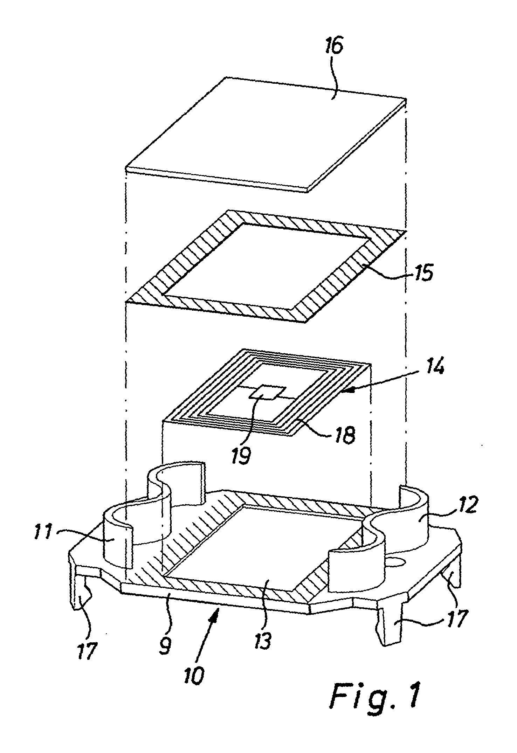

Das in Fig. 1 als erstes Ausführungsbeispiel dargestellte, als Signierplättchen 10 ausgebildete Signierelement weist einen ähnlichen Aufbau wie das im eingangs angegebenen Stand der Technik beschriebene Signierplättchen auf. Ein plättchenförmiger Signierkörper 9 besitzt an seiner Rückseite zwei einstückig angeformte, wellenbandartige Einschlagvorsprünge 11, 12 als Befestigungsteile, die zu beiden Seiten einer zentralen rechteckförmigen Ausnehmung 13 angeordnet sind. Diese Ausnehmung 13 dient zur Aufnahme eines als flache Folie bzw. flaches Plättchen ausgebildeten Transponders 14, dessen Gestalt dem der Ausnehmung 13 entspricht. Ein doppelseitig selbstklebender Folienrahmen 15 besitzt eine zentrale Durchgangsöffnung, deren Gestalt der der Ausnehmung 13 bzw. des Transponders 14 entspricht. Eine quadratische oder rechteckförmige Abdeckplatte 16 entspricht in ihrer Außenkontur der des Folienrahmens 15.

Zum Fixieren des Transponders 14 wird dieser in die Ausnehmung 13 des Signierkörpers 9 eingesetzt, dann wird der Folienrahmen 15 um die Ausnehmung 13 herum auf den Signierkörper 9 aufgelegt, und schließlich wird die Abdeckplatte 16 auf den Folienrahmen 15 aufgedrückt, so dass die Abdeckplatte 16 dichtend die Ausnehmung 13 und damit den Transponder 14 verschließt. Bei Bedarf kann alternativ oder zusätzlich zur selbstklebenden Ausführung noch ein Kleb- oder Haftstoff verwendet werden.

An der in Fig. 1 nach unten weisenden Vorderseite des Signierplättchens 10 sind an den vier Ecken vier hakenartige Haltevorsprünge 17 einstückig angeformt. Diese dienen zum Anstecken des Signierplättchens 10 an einen nicht dargestellten Einschlaghammer, mit dessen Hilfe das Signierplättchen 10 beispielsweise gegen die Stirnseite eines Rundholzes geschlagen wird. Dabei dringen die wellenbandartigen Einschlagvorsprünge 11, 12 in diese Stirnseite ein und fixieren dadurch das Signierplättchen 10 am Rundholz. Dies ist im eingangs angegebenen Stand der Technik oder in der P 3837175 näher beschrieben. Das Signierplättchen 10 besteht insgesamt aus einem Kunststoffmaterial, beispielsweise aus einem Kunststoffmaterial, das sich bei der Papierherstellung in den dabei verwendeten Bädern auflöst. Alternative Ausführungen aus Metall sind prinzipiell ebenfalls denkbar.

Der Transponder 14 weist eine mehrere rechteckige Windungen aufweisende Sende- und Empfangsantenne 18 auf, die mit einem zentral angeordneten Elektronik-Chip 19 verbunden ist. Die mittels hochfrequenter elektromagnetischer Wellen einer nicht dargestellten Sende- und Empfangseinrichtung übermittelten Daten werden von der Sende- und Empfangsantenne 18 erfasst und in einer Speichereinrichtung des Elektronik-Chips 19 abgelegt. Dieser Elektronik-Chip 19 arbeitet ohne eigene Stromversorgung und benützt in an sich bekannter Weise einen Teil der Energie der elektromagnetischen Wellen zur Durchführung der erforderlichen elektronischen Operationen. In ähnlicher Weise können die gespeicherten Daten durch elektromagnetische Aktivierung des Sendeteils des Elektronik-Chips 19 wieder drahtlos ausgelesen werden.

In der praktischen Anwendung werden bei bereits an einem Holzstamm fixiertem Signierplättchen 10 die erforderlichen oder gewünschten Daten dieses Holzstammes oder Rundholzes von einer mit einer tragbaren Sende- und Empfangseinrichtung versehenen Bedienungsperson eingegeben. Dabei handelt es sich beispielsweise um die Stamm-Seriennummer, eine Stamm-Subnummer, die Holzart, die Länge, den Durchmesser, die Güteklasse und dergleichen. Weiterhin kann noch der Name des Forstbetriebs, der Name des Schlägerers und der Name des Rückers eingegeben werden, später noch der Name des Transportbetriebs. Der Stamm kann dadurch jederzeit später drahtlos identifiziert werden, sei es bei der Lagerhaltung, der Inventur, der Kennzeichnung von Schnittholzpaketen, der Beladung von Lkw (Ladeliste) und dergleichen. Eine solche Ladeliste entsteht dann beispielsweise automatisch durch das Lesen der Transponder bei der Beladung eines Lkw oder dergleichen. Die Daten der einzelnen Stämme können dann beispielsweise auch auf einen Aktiv-Transponder des Lkw drahtlos übertragen bzw. von diesem erfasst werden, so dass beispielsweise bei der Einfahrt des Lkw in den Bereich eines Weiterverarbeitungsbetriebs sofort die Ladeliste drahtlos übermittelt wird, beispielsweise am Werkstor. Elektronisch kann dann die angekündigte Liste mit der aktuellen Liste verglichen werden. Bei der Lagerhaltung können auf einfache Weise zugeführte und weggenommene Stämme automatisch erfasst werden. Beim Einschnitt in einem Sägewerk können eine automatische Einschnittverbuchung, eine Ausbeuterechnung (auch stammweise) und eine automatische Lagerabbuchung erfolgen. Im Wald selbst kann eine Bestandsaufnahme für den Revierförster oder eine Rundholzübernahme durch einen Käufer auf einfache Weise erfolgen.

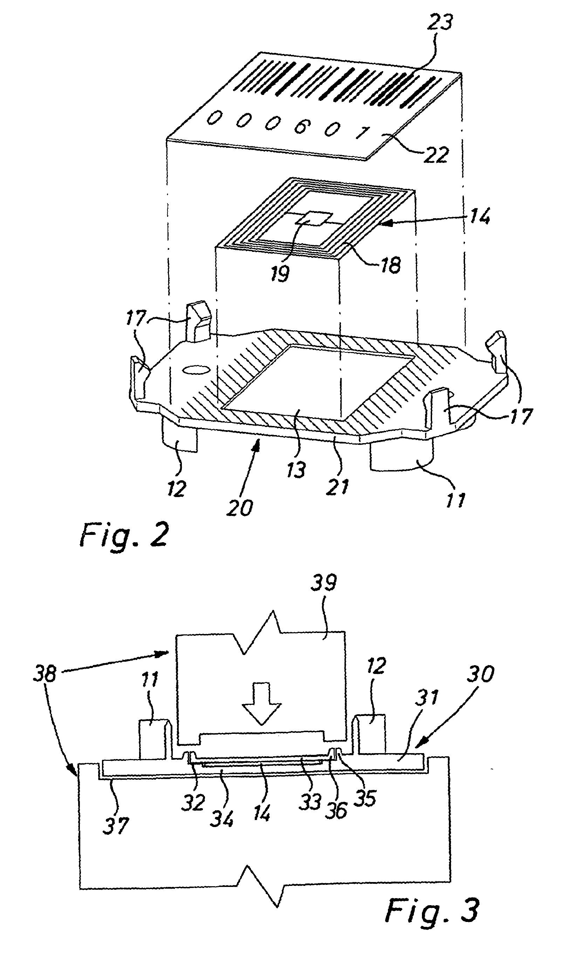

Das in Fig. 2 dargestellte zweite Ausführungsbeispiel entspricht weitgehend dem ersten Ausführungsbeispiel, so dass gleiche oder gleichwirkende Bauteile und Bereiche mit denselben Bezugszeichen versehen und nicht nochmals beschrieben sind. Bei diesem Signierplättchen 20 ist die Ausnehmung 13 hier an der Vorderseite des Signierkörpers 21 angebracht. Die witterungsfeste und wasserdichte Abdeckung des in die Ausnehmung 13 eingesetzten Transponders 14 erfolgt hier durch eine Abdeckfolie 22, die den Transponder 14 übergreift. Sie wird als einseitig selbstklebende Folie mit dem Signierkörper 21 verklebt. Die rechteckige Abdeckfolie 22 ist mit einer Strichcodierung 23 versehen. Dies ist optional und kann auch entfallen oder durch eine andere Codierung, wie eine Zahl, ersetzt werden. Hierdurch besteht die Möglichkeit, zusätzlich zu den elektronisch gespeicherten Daten auch Daten auf andere Weise ablesen zu können.

Beim ersten und zweiten Ausführungsbeispiel können die Transponder 14 auch jeweils an der gegenüberliegenden Seite des Signierkörpers angebracht werden. Anstelle der Abdeckfolie 22 kann auch eine Abdeckplatte treten, die direkt mit dem Signierkörper 9 bzw. 21 verklebt ist.

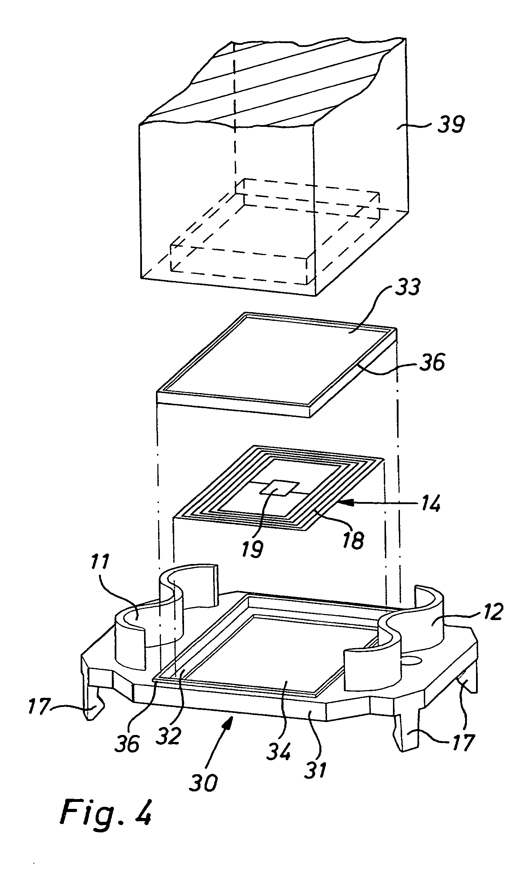

Bei dem in den Fig. 3 und 4 dargestellten dritten Ausführungsbeispiel besitzt der Signierkörper 31 eines Signierplättchens 30 an der Rückseite eine erste Ausnehmung 32 zur Aufnahme einer Abdeckplatte 33, wie auch eine zweite Ausnehmung 34 in der ersten Ausnehmung 32 zur Aufnahme des Transponders 14. Entlang dem Rand der ersten Ausnehmung 32 verläuft eine einstückig angeformte Schweißleiste 35 am Signierkörper 31. Eine entsprechende Schweißleiste 36 ist am Umfangsrand der Abdeckplatte 33 angeformt. Nach dem Einsetzen des Transponders 14 und der Abdeckplatte 33 verlaufen somit die Schweißleisten 35, 36 parallel und unmittelbar nebeneinander, wie dies insbesondere aus Fig. 3 hervorgeht.

Beim dritten Ausführungsbeispiel wird die Abdeckplatte 33 mit dem Signierkörper 31 mittels Heißverpressen verbunden. Hierzu wird das entsprechend vorbereitete Signierplättchen 30 in eine entsprechende Ausnehmung 37 einer Schmelzschweißvorrichtung 38 eingesetzt. Ein von oben herangeführter, entsprechend aufgeheizter Schweißstempel 39 verbindet die beiden Schweißleisten 35, 36 durch Heißverpressen witterungsfest. Auch bei diesem Ausführungsbeispiel kann prinzipiell der Transponder auch an der Vorderseite des Signierplättchens 30 entsprechend eingesetzt werden.

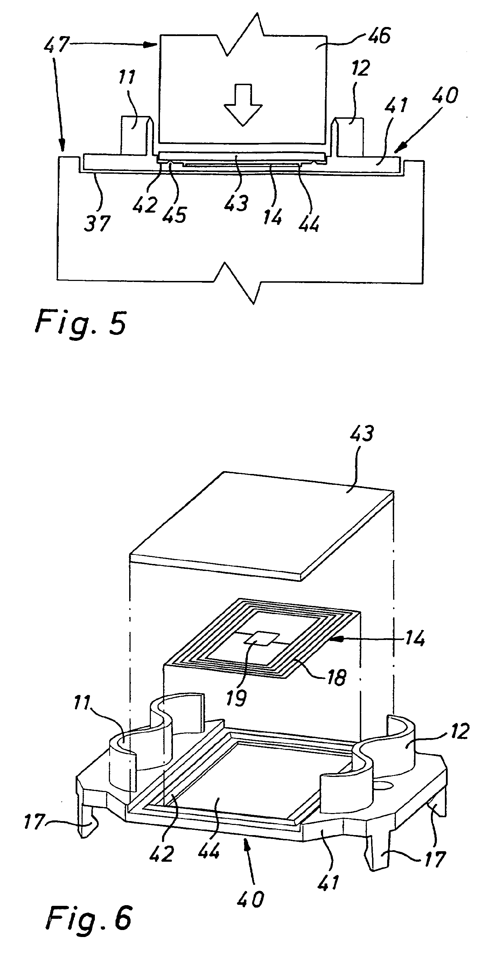

Auch bei dem in den Fig. 5 und 6 dargestellten vierten Ausführungsbeispiel besitzt der Signierkörper 41 eines Signierplättchens 40 eine erste Ausnehmung 42 zur Aufnahme einer Abdeckplatte 43 sowie eine zweite Ausnehmung 44 innerhalb der ersten Ausnehmung 42 zur Aufnahme des Transponders 14. Die Abdeckplatte 43 weist keine Schweißleiste auf, jedoch erhebt sich eine Schweißleiste 45 vom Bodenbereich der ersten Ausnehmung 42 und umgreift die zweite Ausnehmung 44. Nach dem Einsetzen des Transponders 14 wird auch hier die Abdeckplatte 43 in die erste Ausnehmung 42 eingesetzt und kommt somit in Kontakt mit der Schweißleiste 45. Ein Schweißstempel 46 einer Ultraschall-Schweißanlage 47 wird an die Abdeckplatte 43 gemäß Fig. 5 herangeführt und verschweißt die Schweißleiste 45 mit der Abdeckplatte 43 mittels Ultraschall.

Eine weitere mögliche, nicht dargestellte Verbindungsart ist noch das Laserschweißen, das zum Verbinden einer Abdeckplatte mit dem Signierkörper geeignet ist. Selbstverständlich können die genannten Schweißverfahren auch bei Anordnungen gemäß den ersten beiden Ausführungsbeispielen eingesetzt werden.

Auch beim dritten und vierten Ausführungsbeispiel ist prinzipiell die Anordnung des Transponders 14 an beiden Seiten des jeweiligen Signierkörpers möglich.

Strichcodierungen oder andere Codierungen können jeweils dann an den Abdeckplatten angebracht werden, wenn diese an der Vorderseite des jeweiligen Signierplättchens angeordnet sind.

## Patentansprüche

1. Signierelement zum Kennzeichnen von Holz, insbesondere von Baumstämmen mit einem plättchenartigen, eine Signatur aufweisenden Signierkörper, an dem mindestens ein Befestigungsteil zur Befestigung des Signierelements am zu signierenden Holz angeordnet ist, wobei am Signierkörper (9; 21; 31; 41) zur Signatur ein einen Datenspeicher aufweisender Transponder (14) zur drahtlosen Datenübertragung vorgesehen ist, **dadurch gekennzeichnet, dass** der der Signierkörper (9; 21; 31; 41) aus Kunststoff besteht, wobei an den vier Ecken hakenartige Haltevorsprünge (17) zum Anstecken des Signierplättchens (10; 20; 30; 40) an einen Einschlagammer und an der Rückseite Einschlagvorsprünge (17) als Befestigungsteile zum Einschlagen mittels des Einschlaghammers in das zu kennzeichnende Holz einstückig angeformt sind, dass der Transponder (14) plättchenförmig oder folienartig ausgebildet und/oder im Signierkörper (9; 21; 31; 41) versenkt angeordnet ist, und dass eine den Transponder (14) insbesondere wasserdicht abdeckende Abdeckplatte (16; 33; 43) und/oder Abdeckfolie (22) vorgesehen ist.

2. Signierelement nach Anspruch 1, **dadurch gekennzeichnet, dass** der Transponder (14) eine Sende-/Empfangsantenne (18) für hochfrequente elektromagnetische wellen besitzt.

3. Signierelement nach Anspruch 2, **dadurch gekennzeichnet, dass** die Sende-/Empfangsantenne (18) einen mit dem Datenspeicher versehenen Elektronik-Chip (19) umgreift.

4. Signierelement nach einem der vorhergehenden Ansprüche, **dadurch gekennzeichnet, dass** die Abdeckplatte (16) oder - folie (22) mit dem Signierkörper (9; 21) verklebt ist, insbesondere mittels einer selbsthaftenden Klebeschicht oder eines selbsthaftenden, den Transponder (14) umgreifenden Folienrahmens (15).

5. Signierelement nach einem der Ansprüche 1 bis 3, **dadurch gekennzeichnet, dass** die vorzugsweise im Signierkörper (31; 41) eingelassene Abdeckplatte (33; 43) randseitig mit dem Signierkörper (31; 41) verschweißt ist, vorzugsweise mittels Ultraschweißen, Laserschweißen oder Heißverpressen.

6. Signierelement nach Anspruch 5, **dadurch gekennzeichnet, dass** die Abdeckplatte (33) und/oder der Signierkörper (31; 41) zum gegenseitigen Verschweißen eine randseitige Schweißleiste (35, 36; 45) besitzt.

7. Signierelement nach einem der vorhergehenden Ansprüche, **dadurch gekennzeichnet, dass** die Abdeckplatte (33) oder die Abdeckfolie (22) mit einer optischen Signatur versehen ist, die insbesondere als Aufdruck oder Einprägung ausgebildet ist.

8. Signierelement nach einem der vorhergehenden Ansprüche, **dadurch gekennzeichnet, dass** der Datenspeicher zur Aufnahme und Wiedergabe von Holzdaten und vorzugsweise auch noch Be-und Verarbeitungsdaten vorgesehen ist.

## Claims

1. Marking element for the marking of timber, in particular tree-trunks, with a platelet-like marking body bearing a symbol, on which is provided one or more fastening elements for attaching the marking element to the timber to be marked, wherein there is provided on the marking body (9; 21; 31; 41) for the symbol a transponder (14) with a data memory for wireless data transmission, **characterised in that** the marking body (9; 21; 31; 41) is made of plastic, wherein hook-like retaining projections (17) for pinning the marking platelet (10; 20; 30; 40) to a driving-in hammer, and on the reverse, driving-in projections (17) as fastening elements for driving into the timber to be marked using the driving-in hammer, are formed integrally at the four corners, that the transponder (14) is in the form of a platelet or foil sheet and/or is sunk into the marking body (9; 21; 31; 41), and that a cover plate (16; 33; 43) and/or cover foil (22) covering the transponder (14) and in particular waterproof is provided.

2. Marking element according to claim 1, **characterised in that** the transponder (14) has a transceiver aerial (18) for high-frequency magnetic waves.

3. Marking element according to claim 2, **characterised in that** the transceiver aerial (18) encompasses an electronic chip (19) provided with the data memory.

4. Marking element according to any of the preceding claims, **characterised in that** the cover plate or foil sheet (22) is bonded to the marking body (9; 21), in particular by means of a self-adhesive bonding layer or a self-adhesive foil frame (15) encompassing the transponder (14).

5. Marking element according to any of claims 1 to 3, **characterised in that** the cover plate (33; 43) which is preferably let into the marking body (31; 41) is welded at the edges to the marking body (31; 41), preferably by means of ultrasonic welding, laser welding or hot pressing.

6. Marking element according to claim 5, **characterised in that** the cover plate (33) and/or the marking body (31; 41) have an edge welding strip (35, 36; 45) for welding together.

7. Marking element according to any of the preceding claims, **characterised in that** the cover plate (33) or the cover foil (22) is provided with an optical symbol, in particular in the form of an imprint or impression.

8. Marking element according to any of the preceding claims, **characterised in that** the data memory is provided for the recording and reproduction of timber data, and preferably also machining and processing data.

## Revendications

1. Dispositif de marquage pour identifier du bois, notamment des troncs d'arbres avec un corps de marquage en forme de plaquette, présentant une signature, au niveau duquel au moins un élément de fixation pour la fixation du dispositif de marquage est agencé au niveau du bois à marquer, un transpondeur (14) présentant une mémoire de données pour la transmission de données sans fil étant prévu au niveau du corps de marquage (9 ; 21 ; 31 ; 41) pour la signature, **caractérisé en ce que** le corps de marquage (9 ; 21 ; 31 ; 41) est en plastique, dans lequel sont formées d'un seul tenant au niveau des quatre coins, des saillies de retenue (17) crochues pour attacher la plaquette de marquage (10 ; 20 ; 30 ; 40) au niveau d'un marteau d'enfoncement et au dos des saillies à enfoncer (17) comme éléments de fixation à enfoncer dans le bois à identifier au moyen d'un marteau d'enfoncement, **en ce que** le transpondeur (14) est réalisé en forme de plaquette ou de type feuille et/ou noyé dans le corps de marquage (9 ; 21 ; 31 ; 41) et **en ce qu'**une plaque de recouvrement (16 ; 33 ; 43) et/ou une feuille de recouvrement (22) recouvrant le transpondeur (14) en particulier de manière étanche à l'eau est prévue.

2. Dispositif de marquage selon la revendication 1, **caractérisé en ce que** le transpondeur (14) dispose d'une antenne d'émission / réception (18) pour ondes électromagnétiques à haute fréquence.

3. Dispositif de marquage selon la revendication 2, **caractérisé en ce que** l'antenne d'émission / réception (18) enserre une puce électronique (19) dotée de la mémoire de données.

4. Dispositif de marquage selon l'une quelconque des revendications précédentes, **caractérisé en ce que** la plaque (16) ou feuille (22) de recouvrement est collée avec le corps de marquage (9 ; 21), en particulier au moyen d'une couche autoadhésive ou d'un cadre pour feuille autoadhésif enveloppant le transpondeur (14).

5. Dispositif de marquage selon l'une quelconque des revendications 1 à 3, **caractérisé en ce que** la plaque de recouvrement (33 ; 43) encastrée de préférence dans le corps de marquage (31 ; 41) est soudée sur le bord avec le corps de marquage (31 ; 41), de préférence par soudage par ultrasons, soudage au laser ou compression à chaud.

6. Dispositif de marquage selon la revendication 5, **caractérisé en ce que** la plaque de recouvrement (33) et/ou le corps de marquage (31 ; 41) pour le soudage réciproque dispose d'une barre de soudure (35, 36 ; 45) sur le bord.

7. Dispositif de marquage selon l'une quelconque des revendications précédentes, **caractérisé en ce que** la plaque de recouvrement (33) ou la feuille de recouvrement (22) est pourvue d'une signature optique, qui est réalisée en particulier sous forme d'impression ou d'empreinte.

8. Dispositif de marquage selon l'une quelconque des revendications précédentes, **caractérisé en ce qu'**est prévue la mémoire de données pour l'enregistrement et la restitution de données de bois et de préférence aussi de données d'usinage et de transformation.
